# EUROPEAN PATENT SPECIFICATION

(11) **EP 2 823 951 B1**
(45) Date of publication and mention of the grant of the patent: **18.11.2015**
(21) Application number: 14175679.1
(22) Date of filing: 03.07.2014
(51) Int. Cl.: B29C 65/02, C08J 5/12

(54) **Method for manufacturing a molded article with insert from a rubber polymer**
Verfahren zur Herstellung eines Formkörpers mit Einsatz aus Kautschukpolymer
Procédé de fabrication d'un article moulé avec insert en polymère de caoutchouc

(30) Priority: 09.07.2013 NL 2011122
(43) Date of publication of application: 14.01.2015
(73) Proprietor: Apollo Tyres Global R&D B.V., 7521 PT Enschede (NL)
(72) Inventor: Reuvekamp, Louis-Philippe Antoine Eugène Maria, 7546 GE Enschede (NL); Nijman, Gerard, 7581 AV Losser (NL)
(74) Representative: Michalski Hüttermann & Partner Patentanwälte mbB

(56) References cited:
- WO-A1-2008/063067
- WO-A1-2008/127091
- US-A1- 2004 060 640

## Description

The invention relates to a method for manufacturing a molded article from a first rubber polymer with an insert from a second rubber polymer.

Molded articles of a first rubber polymer must often be provided with for instance bands or strips of a second rubber polymer. The second rubber polymer then usually differs in respect of a particular property from the first rubber polymer. If the second rubber polymer for instance has a different color from the first rubber polymer, decorative bands or strips are then formed such as appear for instance on the side surfaces of rubber tires. The bands or strips of the second rubber polymer may also provide for a local strengthening and/or reinforcement of the molded article.

In the manufacture of such molded articles it is important that the first and second rubber polymer in the molded article have a good mutual adhesion. In addition, the typical properties of rubber polymers must not be lost due to the mutual connection of the two rubber polymers. Typical rubber properties, such as elastic behavior with a relatively low permanentset, must be retained, also in the molded article with insert.

In a prior art method for manufacturing a molded article from a first rubber polymer with an insert from a second rubber polymer, both rubber polymers are brought together in unvulcanized state in a vulcanizing mould and then vulcanized together. If two rubber polymers are arranged together in a vulcanizing mould and subsequently vulcanized, the two rubber polymers tend to produce a boundary surface between them that is not well defined. The dividing line between a strip of differing color and the rest of a tire for instance may show a random waving which is undesirable, in particular in molded articles for which high aesthetic standards are set.

WO 2008/063067 A discloses a method for mutually adhering molded articles of at least partially vulcanized rubber polymers. The method comprises at least the steps of providing a rubber composition which comprises a peroxide with an initiating temperature lower than the vulcanization temperature of at least one of the rubber polymers; arranging an adhesive layer of the rubber composition on the surface of the molded articles which is to be adhered; bringing the surfaces for adhering together under pressure; and vulcanizing at least the adhesive layer at an increased temperature.

WO 2008/127091 A1 relates to a method for mutually adhering a first molded article of an at least partially vulcanized rubber polymer and a second molded article of a polymer. The method comprises at least the steps of providing a first molded article of a rubber polymer which comprises a compound containing carboxylic acid anhydride; providing a second molded article of a polymer; providing an adhesive composition comprising at least a polyisocyanate, a polyol and a catalyst; arranging an adhesive layer of the adhesive composition on the surface for adhesion of at least one molded article; bringing the surfaces for adhesion together under pressure; and polymerizing at least the adhesive layer at a suitable temperature.

The present invention has for its object to provide a method according to the preamble, wherein the above stated drawbacks of the known method are at least partly obviated.

This object is achieved according to the invention by a method for manufacturing a molded article from a first rubber polymer, which molded article comprises an insert from a second rubber polymer, the method comprising the steps of:
(A) providing an at least partially vulcanized article from the first rubber polymer, the article having a recess that extends in a depth direction and in transverse directions perpendicular to the depth direction, for accommodating the insert;
(B) providing an at least partially vulcanized insert from the second rubber polymer, the insert having a shape such that it can be accommodated in the recess;
(C) arranging an unvulcanized object from a third rubber polymer in the recess to partly fill the recess;
(C') arranging the at least partly vulcanized insert in the recess to obtain an assembly;
(D) vulcanizing the assembly under pressure.

In a method in accordance with the invention, flowing of the rubber polymers into each other at the position of the boundary surface is substantially prevented. If the two rubber polymers have a different color, an optically sharp division results. Further, the two rubber polymers are durably adhered to each other by vulcanization of the third rubber polymer object, which is also allowed to flow some in its unvulcanized state. A molded article results in which the typical rubber-elastic properties of the two rubber polymers separately are substantially retained.

In order to obtain a sharper boundary still, an embodiment of the method according to the invention is characterized in that the article from the first and/or the second rubber polymer is vulcanized to an extent that the article is dimensionally stable. The person skilled in the art will have no difficulties in setting the right conditions of time, temperature etcetera to achieve such a dimensionally stable article.

In an even more preferred embodiment of the method in accordance with the invention, the article from the first and/or the second rubber polymer is substantially completely vulcanized. Again, the person skilled in the art will have no difficulties in setting the right conditions of time, temperature etcetera to achieve such a substantially completely vulcanized article.

The shape of the insert should be such that it can be accommodated in the recess. This can obviously be achieved by adapting the shape of the insert to the shape of the recess. In most cases however, the shape of the insert is dictated by design considerations for instance, and the shape of the recess will be adapted to the inserts shape such that the insert can be accommodated in the recess.

According to the invention, the unvulcanized object from the third polymer is preferably arranged in the recess prior to arranging the at least partly vulcanized insert in the recess. The third polymer object partly fills the recess in order to provide room for the insert. After having arranged the object and insert into the recess of the article, the assembly is heated under pressure to vulcanize the third rubber polymer of the object at an elevated temperature. During this process, the third polymer object may exhibit flow and eventually partly fill a gap that may exist between the boundary surfaces of the insert and those of the recess.

According to the invention, the third polymer should be unvulcanized. This does not mean that the third polymer may not be vulcanized to some extent. The degree of vulcanization however should be low enough in order to be able to obtain a good bonding of the object with the article and the insert. The person skilled in the art will have no difficulties in defining the upper limit to the degree of vulcanization to achieve this goal and to take care in not exceeding this upper limit. Preferably however, the third polymer is not vulcanized.

An embodiment of the invention relates to a method in which the insert has a shape that conforms to the recess in the transverse directions thereof. In such an embodiment, the gap between boundary surfaces of the insert and of the recess that extend in the depth direction is very small, such that during vulcanization the heated third polymer will be prevented from entering this gap. This further improves the sharpness of the interface between the insert and the article.

A shape of the insert that conforms to the recess in the transverse directions thereof is defined as a shape wherein the transverse dimensions of the insert and those of the recess are within 0,5 mm of each other, more preferably within 0,2 mm of each other, and most preferably within 0,1 mm of each other.

The invented method offers the advantage of good bonding and a sharp delineation between the article and the insert incorporated in it, without the need for having to arrange a reactive mixture on the outer boundary surfaces of the insert and/or the inner boundary surfaces of the recess. It has been established that the vulcanization at the boundary surfaces of the insert and the recess yields an adhesion strength that is more than sufficient for the purpose. Another advantage is that the insert and the third rubber polymer object need not be mounted in a mould by mounting means for instance. Indeed, the article from the first polymer, in particular the recess provided in it, serves as a receptacle for the object and the insert. It is not necessary therefore to mount the inserts on the vulcanizing mould by means of a temperature-resistant adhesive tape, by mechanical connection, by drawing vacuum, or any other way, which additional step may compromise the accuracy of placement.

Another embodiment of the invention relates to a method wherein the insert has a height and the height of the insert before arranging it in the recess is less than the depth of the recess. This allows to increase the volume of the third rubber polymer object and provide an increased amount of third polymer into the recess. Another useful embodiment is provided by a method wherein the third rubber polymer object has a height and the accumulated height of the object and the insert after vulcanizing the assembly does not exceed the depth of the recess, and is preferably less than the depth of the recess. Such an embodiment protects the insert against premature damage and moreover has a distinct optical appearance.

A further embodiment of the invention is provided by a method wherein the recess at some depth of the recess has larger transverse dimensions than the insert. In this embodiment, additional room is created within the recess to allow more flow of the third polymer during vulcanization. The enhanced flow capability offered may improve the adhesion between the boundary surfaces of the insert and the recess. This embodiment may also benefice the sharpness of the insert-recess boundary since the likelihood of flow of the third polymer in the upstanding gap (i.e in the depth direction) between the insert and the recess is lowered. Preferably, the third rubber polymer object is provided in the recess at the depth corresponding to the larger transverse dimensions.

The advantages of the method according to the invention are particularly manifest when the first and the second rubber polymer have a different color. Using this preferred embodiment of the method, rubber polymer articles can be made with sharply delineated contrasting inserts incorporated in them.

The rubber polymers applied in the method according to the invention can be prepared in a manner known to the skilled person. Any known method of mixing polymers, fillers and other additives is in principle suitable for this purpose. It is thus possible to mix the rubber polymers, supplemented with additives and/or other polymers if desired, using an internal mixer or Banbury mixer, a single or double-screw extruder apparatus, a blade kneader, a Buss Co-kneader, a roller and the like. Suitable temperatures during mixing are substantially determined by the rheological properties of the relevant rubber polymer. The object of the third rubber polymer may be arranged in any form or physical appearance. A suitable form comprises an unvulcanized rubber polymer sheet, such as those obtained by rolling.

The first, second and third rubber polymers can be selected from those known in the art. In general these rubbers have a glass transition temperature Tg lower than -10°C, although this is not essential. Rubbers suitable for application are for instance chosen from the group of natural rubbers, isoprene rubbers, butadiene rubbers, styrene butadiene copolymer rubbers, acrylonitrile butadiene copolymer rubbers, if desired copolymerized with styrene, butadiene isoprene copolymer rubbers, chloroprene rubbers, butyl and acryl rubbers, and ethylene-propylene copolymers which, if desired, comprise a third copolymerizable diene monomer such as for instance 1,4-hexadiene, dicyclopentadiene, dicyclooctadiene, methylene norbornene, ethylidene norbornene and tetrahydroindene. If desired, the rubber polymers may comprise a minor quantity of natural rubber and/or elastomer, which is preferably composed of 1,3-diene compounds such as for instance butadiene and/or isoprene and/or 2,3-dimethyl butadiene. The rubber polymers applied in the method preferably are an ethylene-propylene rubber, more preferably an ethylene-propylene-diene rubber (EPDM). Mixtures of said rubber polymers are also possible.

The first, second and third rubber polymer may differ from each other. In a preferred embodiment of the invention, at least two of the first, second and third rubber polymer are of the same type (as defined above), and more preferred all three of the first, second and third rubber polymer are of the same type.

The third polymer may be provided with a cross-linker for the purpose of vulcanization. Suitable cross-linkers, in particular when the third rubber polymer comprises an EPDM rubber polymer, comprise phenol resins in combination with a tin chloride compound as catalyst. It is also possible to apply cross-linkers on the basis of sulphur and/or peroxides. The third rubber polymer may also be provided with reactive groups such as for instance hydroxyl groups, alkoxysilyl groups, amino and epoxide groups and/or carboxyl groups. Particularly suitable matrix polymers are those provided with carboxyl groups, for instance by grafting unsaturated dicarboxylic anhydride compounds onto the rubber polymer. A maleic anhydride-functionalized rubber polymer is particularly suitable as third rubber polymer.

Other additives can also be added to the rubber polymers applied in the method according to the invention. Examples of usual additives are stabilizers, antioxidants, lubricants, fillers, dyes, pigments, flame retardants, conductive fibers and reinforcing fibers. The rubber polymers can also comprise oil as additive, and/or petroleum plasticizers.

The rubber polymers, in particular the polymer used for the insert, may be colored. Any dye known to the skilled person may in principle be used. It is thus possible to apply organic and/or inorganic dyes, and dyes which are soluble and/or non-soluble in the rubber polymers. Examples of suitable mineral dyes include metals in powder form, such as for instance powdered aluminum, copper, metal oxides such as for instance silicates, aluminates, titanates, iron oxides and/or hydroxides, in addition to mixtures of oxides of for instance cobalt, aluminum or zinc. Suitable organic color pigments comprise for instance indanthrones, pyrroles and/or diazo compounds, in addition to organometallic pigments such as for instance phthalocyanines. Coupling agents suitable for the rubber polymers according to the invention comprise silane compounds. Particularly suitable silane compounds comprise di- and tetrasulphides. If desired, the rubber polymers can also comprise carbon black particles and/or silica particles, in principle of any known type.

The invention also relates to a molded article from a first rubber polymer and at least one insert from a second rubber polymer, which molded article can be obtained with the method according to the invention. and has an optically sharp delineation between the first rubber polymer and the insert. Such a molded article preferably comprises a first rubber polymer in a first color and a second rubber polymer in a second color that differs form the first color. The first rubber polymer more preferably has a black color and the second rubber polymer is colored other than black, for instance white. Within the scope of this application, colored is understood to mean a color differing from black, including white and/or metallic colors. The molded article that is obtained by the invented method can in principle have all colors, such as for instance red, green, yellow, blue, indigo, purple and brown.

Particularly suitable molded articles according to the invention comprise a rubber tire or a spoiler for a vehicle. The rubber tire can be provided over its whole surface with inserts, for instance on the tread or, conversely, on the sides of the tire. The inserts can be used as indicator, for instance to indicate the degree of wear of the tire, or can be arranged for aesthetic reasons. The method of the invention is also particularly suitable for manufacturing flexible spoilers, or more generally for flexible bodywork parts of cars or other vehicles. Such bodywork components often require decoration, wherein high standards are set for the decoration. A flexible spoiler for a car is for instance described in US 2005/0012359 and in US 2005/0017541, the content of which is expressly incorporated in the present application. The described spoiler comprises an airflow-conducting element and an operating element for operating the airflow-conducting element. The airflow-conducting element is attached to the bottom of the bumper, is manufactured from a rubber polymer and can be moved in and out by means of the operating element. A resilient connection between the airflow-conducting element and the bumper holds the spoiler in the moved-in inoperative position. The operating member can for instance take the form of a number of inflatable bellows disposed on the rear side of the spoiler. When the inflatable bellows are inflated, the spoiler moves forward from the moved-in position to the moved-out position. A PTFE rod provides for lateral guiding of the element. On the basis of the method according to the invention the spoiler can be decorated with black and/or colored inserts, for instance in the form of laterally running bands or other marks. It will be apparent that the invention is not limited to particular insert shapes, but that any shape is possible in principle.

The present invention will now be further elucidated on the basis of the following figures, without however being limited thereto. In the figures:
Figure 1A schematically shows a cross-sectional side view of embodiments of an article, an insert and a third rubber polymer object used in the method according to the invention;
Figure 1B schematically shows a cross-sectional side view of the arrangement of the insert and third rubber polymer object of Figure 1A in the article of Figure 1 in accordance with the method of the invention;
Figure 1C schematically shows a cross-sectional side view of an assembly of the article, the insert and the third rubber polymer object of Figure 1A during vulcanization under pressure in accordance with the method of the invention;
Figure 2A schematically shows a cross-sectional side view of a molded article comprising an insert, as obtained by the method according to the invention; and finally Figure 2B schematically shows a top view of the molded article shown in Figure 2A.

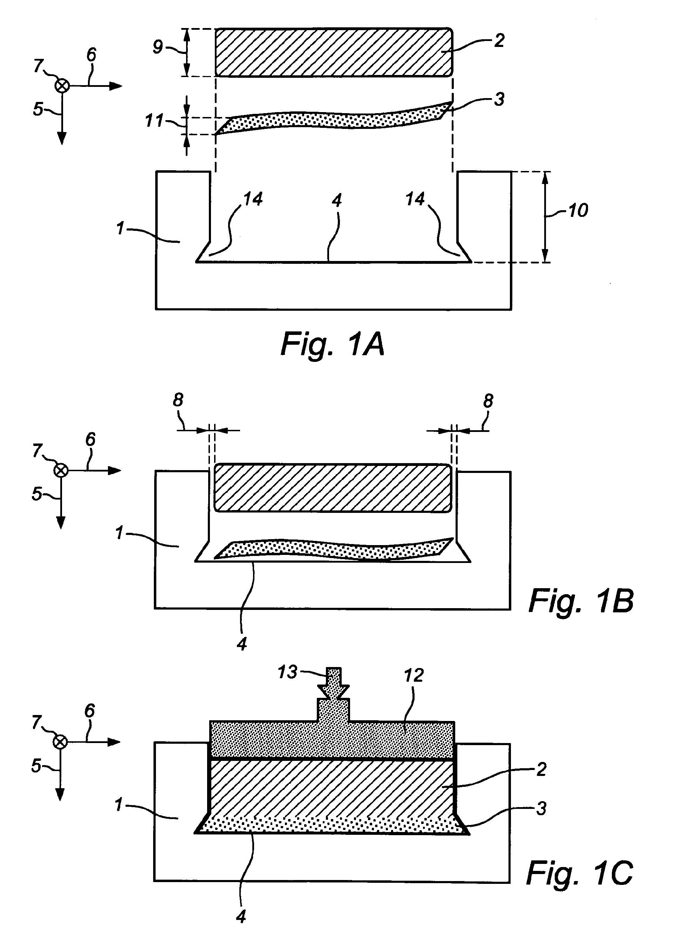

According to one embodiment of the invented method, there are provided a vulcanized article 1 from a first rubber polymer, a vulcanized insert 2 from a second rubber polymer, and an unvulcanized object 3 from a third rubber polymer, as shown in figure 1A. The article 1 has one or more recesses 4 that extend in a depth direction 5 and in transverse directions (6, 7), extending perpendicular to the depth direction 5. The recesses 4 are adapted to accommodate a number of inserts 2.

The article 1 and insert 2 are obtained as follows. A first and a second mixture of a commercially available ethylene-propylene-diene(EPDM) rubber and the constituents stated in table 1 were prepared by mixing in a standard kneader for about 5 minutes at an average temperature of about 150°C. The silica applied in the second mixture was Zeosil-1165MP from the Rhodia company, although any other silica may also be used. A polysiloxane compound (bis-(triethoxysilylpropyl) tetrasulphide from the Evonik company) was used as coupling agent. A standard vulcanizing system on the basis of sulphur was added to both mixtures. Usual pigments for EPDM and titanium dioxide were further added in the second mixture. The quantities given in table 1 are parts per hundred parts of EPDM rubber (phr).

**Table 1: Polymer compositions**

| Material | First rubber polymer | Second rubber polymer |
|---|---|---|
| EPDM | 100 | 100 |
| Oil | 20 | 20 |
| Silica | - | 50 |
| Coupling agent | - | 3,5 |
| Carbon black | 70 | - |
| Zinc oxide | 5 | 5 |
| Stearic acid | 1 | 1 |
| Vulcanization system | 10 | 10 |
| Titanium dioxide | - | 5 |
| Pigments | - | 15 |
| UV stabilizers | - | 5 |

The thus obtained second mixture was then rolled out and cooled by being subjected to a rolling process at about 50°C. The sheet-like second rubber composition was then vulcanized for about 12 minutes at a temperature of about 160°C. After completion of the vulcanization the sheets of second rubber polymer were cooled to room temperature and cut into colored inserts 2. Injection or compression molding of the second rubber composition to obtain the inserts 2 is also possible, and is preferred.

The article 1 was obtained in basically the same way. To produce a recess 4 in the article 1 however, vulcanization of the first rubber polymer was carried out in a mould having a projected part in the shape of the recess 4. Other methods are also possible. Vulcanization was carried out for about 12 minutes at a temperature of about 160°C. Vulcanizing the article 1 and the insert 2 under the given conditions ensures that the article 1 and the insert 2 are substantially completely vulcanized and therefore dimensionally stable. Care is taken to ensure that an insert 2 has a shape such that it can be accommodated in a recess 4, and in particular that its shape conforms to the shape of a recess 4 in the transverse directions (6, 7) thereof. In the embodiment shown, the dimensions of an insert 2 in the transverse directions (6, 7) and those of a recess 4 are within 0,2 mm of each other. A very small gap 8 of less than 0,1 mm wide (not visible in the figures) therefore exists between the boundary surfaces of the insert 2 and of the recess 4 that extend in the depth direction 5.

The object 3 from the third polymer was obtained by preparing the second mixture as elucidated above. The second and third rubber polymer are therefore identical in this specific example. The thus obtained mixture was then rolled out and cooled by being subjected to a rolling process at about 50°C to obtain an unvulcanized object from the third polymer.

As shown in figure 1B, an unvulcanized object 3 from a third rubber polymer is arranged in a recess 4 to partly fill the recess 4 in accordance with one step of the invented method. It should be noted that more than one (rolled) object 3 may be applied to the recess 4 to build up enough volume.

One or more vulcanized inserts are then arranged in recess(es) 4 to obtain an assembly of article 1, one or more inserts 2 and one or more objects 3. An insert 2 preferably has a height 9 that is less than the depth 10 of a recess 4 in which it is provided.

The assembly (1, 2, 3) is then brought into a mould and vulcanized under pressure 13 by lowering a pressure stamp 12 having the shape of the insert 2 in the transverse plane (6, 7). In this process, the assembly is brought to a vulcanization temperature of about 160°C. The heated third rubber polymer object 3 exhibits some flow during this vulcanization step but will substantially be prevented from entering the gap 8, due to the small dimensions of the latter. This ensures that a sharp division is maintained between the insert 2 and the article 1 in the transverse plane (6, 7). To further ensure a sharp interface between article 1 and insert 2, the recess 4 at some depth has enlarged transverse dimensions such that a circumferential cavity 14 is formed in which excess third polymer rubber may flow. Another possibility is to keep the transverse dimensions of the recess substantially constant (or with a slight undercut) and to provide a third rubber polymer object having transverse dimensions that are somewhat smaller than the transverse dimensions of the recess, preferably 0,2 - 2 mm smaller, more preferably 0,5 - 1 mm smaller. A circumferential cavity 14 filled with vulcanized third rubber polymer may also help in providing a mechanical interlock between insert 2 and article 1.

After about 12 minutes the mould was opened and the molded article removed from the mould. The molded article comprised a black matrix incorporating a number of inserts 2. The inserts 2 were adhered well to the first (black) rubber polymer and had substantially the same form as before vulcanization of the molded article. The division between the (black) matrix part of the molded article and the (colored) inserts 2 was sharp.

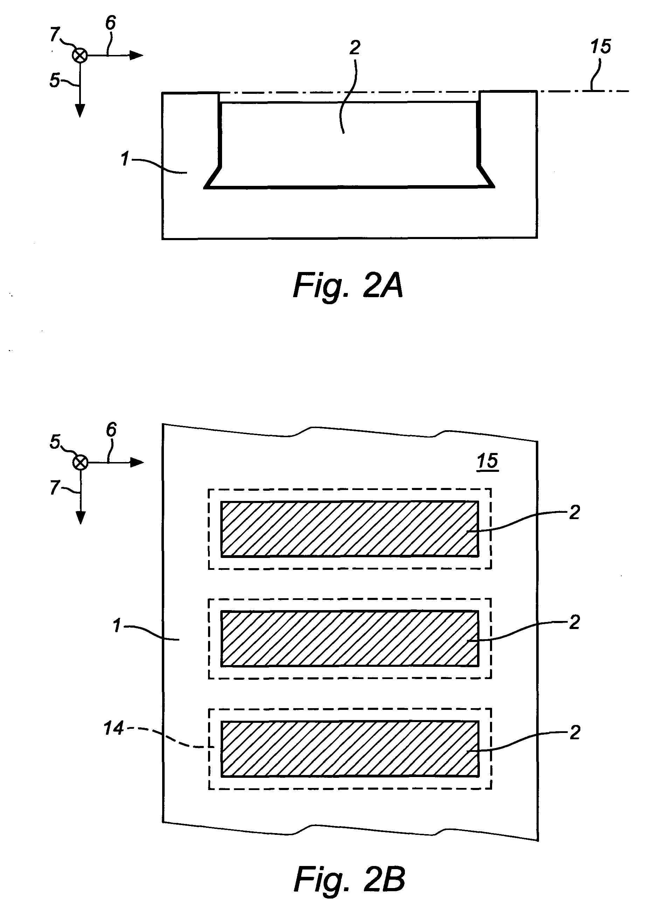

As shown in figures 1C and 2A, the object 3 preferably has a height 11 such that the accumulated height of an object 3 and an insert 2 after vulcanizing the assembly does not exceed the depth 10 of a recess 4, and is more preferably less than the depth 10 of a recess 4. The inserts 3 are somewhat sunk into the upper surface 15 of the article 1. This protects the inserts 3 against premature damage and moreover gives the article a distinct optical appearance.

## Claims

1. Method for manufacturing a molded article from a first rubber polymer, which molded article comprises an insert (2) from a second rubber polymer, the method comprising the steps of:
(A) providing an at least partially vulcanized article (1) from the first rubber polymer, the article having a recess (4) that extends in a depth direction and in transverse directions perpendicular to the depth direction, for accommodating the insert (2);
(B) providing an at least partially vulcanized insert (2) from the second rubber polymer, the insert (2) having a shape such that it can be accommodated in the recess (4);
(C) arranging an unvulcanized object (3) from a third rubber polymer in the recess (4) to partly fill the recess (4);
(C') arranging the at least partly vulcanized insert (2) in the recess (4) to obtain an assembly;
(D) vulcanizing the assembly under pressure;
wherein the article from the first and/or the second rubber polymer is vulcanized to an extent that the article is dimensionally stable and
wherein the recess (4) has a circumferential cavity (14) in which excess third rubber polymer may flow.

2. Method as claimed in claim 1, wherein the article from the first and/or the second rubber polymer is substantially completely vulcanized.

3. Method as claimed in any one of the preceding claims, wherein the insert (2) has a shape that conforms to the recess (4) in the transverse directions thereof.

4. Method as claimed in any one of the preceding claims, wherein the transverse dimensions of the insert (2) and those of the recess (4) are within 0,2 mm of each other.

5. Method as claimed in any one of the preceding claims, wherein the insert (2) has a height and the height of the insert before arranging it in the recess (4) is less than the depth of the recess (4).

6. Method as claimed in claim 5, wherein the third rubber polymer object (3) has a height and the accumulated height of the object (3) and the insert (2) after vulcanizing the assembly does not exceed the depth of the recess (4), and is preferably less than the depth of the recess (4).

7. Method as claimed in any one of the preceding claims, wherein the recess (4) at some depth of the recess (4) has larger transverse dimensions than the insert (2).

8. Method as claimed in claim 7, wherein the third rubber polymer object (3) is provided in the recess (4) at the depth of the larger transverse dimensions.

9. Method as claimed in any one the preceding claims, wherein the third rubber polymer object (3) has transverse dimensions and these dimensions are smaller than the transverse dimensions of the recess (4), preferably 0,2 - 2 mm smaller, more preferably 0,5 - 1 mm smaller.

10. Method as claimed in any one of the preceding claims, wherein the first and the second rubber polymer have a different color.

11. Method as claimed in any one of the preceding claims, wherein the first, the second and/or the third rubber polymer comprises an ethylene-propylene-diene rubber (EPDM).

## Patentansprüche

1. Verfahren zum Herstellen eines Formartikels aus einem ersten Kautschukpolymer, wobei der Formartikel einen Einsatz (2) aus einem zweiten Kautschukpolymer aufweist, wobei das Verfahren die Schritte aufweist:
(A) Bereitstellen eines mindestens teilvulkanisierten Artikels (1) aus dem ersten Kautschukpolymer, wobei der Artikel eine sich in einer Tiefenrichtung und in Querrichtungen senkrecht zur Tiefenrichtung erstreckende Vertiefung (4) zum Aufnehmen des Einsatzes (2) aufweist;
(B) Bereitstellen eines mindestens teilvulkanisierten Einsatzes (2) aus dem zweiten Kautschukpolymer, wobei der Einsatz (2) eine derartige Form hat, dass er in der Vertiefung (4) aufgenommen werden kann;
(C) Anordnen eines unvulkanisierten Gegenstands (3) aus einem dritten Kautschukpolymer in der Vertiefung (4) derart, dass er die Vertiefung (4) teilweise füllt;
(C') Anordnen des mindestens teilvulkanisierten Einsatzes (2) in der Vertiefung (4), um eine Baugruppe zu erhalten; und
(D) Vulkanisieren der Baugruppe unter Druck,
wobei der Artikel aus dem ersten und/oder dem zweiten Kautschukpolymer in einem derartigen Maß vulkanisiert wird, dass der Artikel formstabil ist, und
wobei die Vertiefung (4) einen Umfangshohlraum (14) aufweist, in den überschüssiges Kautschukpolymer fließen kann.

2. Verfahren nach Anspruch 1, wobei der Artikel aus dem ersten und/oder zweiten Kautschukpolymer im Wesentlichen vollständig vulkanisiert ist.

3. Verfahren nach einem der vorangehenden Ansprüche, wobei der Einsatz (2) eine Form hat, die mit der Vertiefung (4) in ihren Querrichtungen übereinstimmt.

4. Verfahren nach einem der vorangehenden Ansprüche, wobei die Querabmessungen des Einsatzes (2) und diejenigen der Vertiefung (4) innerhalb von 0,2 mm miteinander übereinstimmen.

5. Verfahren nach einem der vorangehenden Ansprüche, wobei der Einsatz (2) eine Höhe aufweist, wobei die Höhe des Einsatzes, bevor er in der Vertiefung (4) angeordnet wird, kleiner ist als die Tiefe der Vertiefung (4).

6. Verfahren nach Anspruch 5, wobei der Gegenstand (3) aus dem dritten Kautschukpolymer eine Höhe aufweist, und wobei die akkumulierte Höhe des Gegenstandes (3) und des Einsatzes (2) nach dem Vulkanisieren der Baugruppe nicht größer ist als die Tiefe der Vertiefung (4) und vorzugsweise kleiner ist als die Tiefe der Vertiefung (4).

7. Verfahren nach einem der vorangehenden Ansprüche, wobei die Vertiefung (4) an irgendeiner Tiefe der Vertiefung (4) größere Querabmessungen hat als der Einsatz (2).

8. Verfahren nach Anspruch 7, wobei der Gegenstand (3) aus dem dritten Kautschukpolymer in der Vertiefung (4) an der Tiefe mit den größeren Querabmessungen angeordnet ist.

9. Verfahren nach einem der vorangehenden Ansprüche, wobei der Gegenstand (3) aus dem dritten Kautschukpolymer Querabmessungen aufweist, wobei diese Abmessungen kleiner sind als die Querabmessungen der Vertiefung (4), vorzugsweise 0,2 bis 2 mm kleiner und bevorzugter 0,5 bis 1 mm kleiner.

10. Verfahren nach einem der vorangehenden Ansprüche, wobei das erste und das zweite Kautschukpolymer eine verschiedene Farbe haben.

11. Verfahren nach einem der vorangehenden Ansprüche, wobei das erste, das zweite und/oder das dritte Kautschukpolymer einen Ethylen-Propylen-Dien-Kautschuk (EPDM) aufweisen.

## Revendications

1. Procédé de fabrication d'un article moulé à partir d'un premier polymère du type caoutchouc, l'article moulé comprenant un insert (2) à partir d'un deuxième polymère du type caoutchouc, le procédé comprenant les étapes consistant à :
(A) la fourniture d'un article (1) au moins partiellement vulcanisé à partir du premier polymère du type caoutchouc, l'article ayant un évidement (4) qui se prolonge dans une direction de profondeur et dans des directions transversales perpendiculaires à la direction de la profondeur, pour recevoir l'insert (2) ;
(B) la fourniture d'un insert (2) au moins partiellement vulcanisé à partir du deuxième polymère du type caoutchouc, l'insert (2) ayant une forme de sorte qu'il peut être logé dans l'évidement (4) ;
(C) la disposition d'un objet (3) non vulcanisé à partir d'un troisième polymère du type caoutchouc dans l'évidement (4) pour combler partiellement l'évidement (4) ;
(C') la disposition de l'insert (2) au moins partiellement vulcanisé dans l'évidement (4) pour obtenir un assemblage ;
(D) la vulcanisation de l'assemblage sous pression ;
dans lequel l'article à partir du premier et/ou du deuxième polymère du type caoutchouc est vulcanisé à un point de sorte que l'article a une stabilité dimensionnelle et
dans lequel l'évidement (4) a une cavité (14) circonférentielle dans laquelle le troisième polymère du type caoutchouc en excès peut couler.

2. Procédé selon la revendication 1, dans lequel l'article à partir du premier et/ou du deuxième polymère du type caoutchouc est sensiblement complètement vulcanisé.

3. Procédé selon l'une quelconque des revendications précédentes, dans lequel l'insert (2) a une forme qui se conforme à l'évidement (4) dans les directions transversales de celui-ci.

4. Procédé selon l'une quelconque des revendications précédentes, dans lequel les dimensions transversales de l'insert (2) et celles de l'évidement (4) sont dans 0,2 mm les uns des autres.

5. Procédé selon l'une quelconque des revendications précédentes, dans lequel l'insert (2) a une hauteur et la hauteur de l'insert avant de le disposer dans l'évidement (4) est inférieure à la profondeur de l'évidement (4).

6. Procédé selon la revendication 5, dans lequel l'objet (3) à partir du troisième polymère du type caoutchouc a une hauteur et la hauteur cumulée de l'objet (3) et de l'insert (2) après la vulcanisation de l'assemblage ne dépasse pas la profondeur de l'évidement (4), et est préférablement inférieure à la profondeur de l'évidement (4).

7. Procédé selon l'une quelconque des revendications précédentes, dans lequel l'évidement (4) à une certaine profondeur de l'évidement (4) a des dimensions transversales plus grandes que l'insert (2).

8. Procédé selon la revendication 7, dans lequel l'objet (3) à partir du troisième polymère du type caoutchouc est prévu dans l'évidement (4) à la profondeur des dimensions transversales plus grandes.

9. Procédé selon l'une quelconque des revendications précédentes, dans lequel l'objet (3) à partir du troisième polymère du type caoutchouc a des dimensions transversales et ces dimensions sont plus petites que les dimensions transversales de l'évidement (4), préférablement 0,2 - 2 mm plus petites, plus préférablement 0,5 - 1 mm plus petites.

10. Procédé selon l'une quelconque des revendications précédentes, dans lequel le premier et le deuxième polymère du type caoutchouc ont une couleur différente.

11. Procédé selon l'une quelconque des revendications précédentes, dans lequel le premier, le deuxième et/ou le troisième polymère du type caoutchouc comprend un caoutchouc éthylène-propylène-diène (EPDM).
